# EUROPÄISCHE PATENTSCHRIFT

(11) **EP 2 443 365 B1**
(45) Veröffentlichungstag und Bekanntmachung des Hinweises auf die Patenterteilung: **23.04.2014**
(21) Anmeldenummer: 10721337.3
(22) Anmeldetag: 20.05.2010
(51) Int. Cl.: F16F 15/16

(54) **ELASTISCHE KUPPLUNG IN SCHEIBENBAUWEISE**
ELASTIC COUPLING HAVING LAMELLAR CONSTRUCTION
EMBRAYAGE ÉLASTIQUE À DISQUES

(30) Priorität: 17.06.2009 DE 102009025642
(43) Veröffentlichungstag der Anmeldung: 25.04.2012
(73) Patentinhaber: Voith Patent GmbH, 89522 Heidenheim (DE)
(72) Erfinder: POLIFKE, Gregor, 89537 Giengen (DE); BROCKMANN, Rolf, 89522 Heidenheim (DE); BRENNER, Franz, 89564 Nattheim (DE); KOCH, Werner, 73326 Deggingen (DE); MENNE, Achim, 74564 Crailsheim (DE)
(74) Vertreter: Dr. Weitzel & Partner
(86) Internationale Anmeldenummer: PCT/EP2010/003110
(87) Internationale Veröffentlichungsnummer: WO 2010/145745

(56) Entgegenhaltungen:
- WO-A1-01/11267
- DE-A1- 10 201 252
- DE-A1- 10 241 103
- DE-A1- 19 917 014
- DE-C1- 10 022 628

## Beschreibung

Die vorliegende Erfindung betrifft eine elastische Kupplung in Scheibenbauweise mit einer Dämpfungseinrichtung, insbesondere für einen Kraftfahrzeugantriebsstrang, gemäß dem Oberbegriff des Anspruchs 1. Solche elastischen Kupplungen mit Dämpfungseinrichtung sollen die Drehschwingungen, welche die Brennkraftmaschine erzeugt, vom nachfolgenden Antriebsstrang fernhalten. Vorteilhaft soll dabei bei einem kleinen relativen Verdrehwinkel zwischen den beiden Kupplungshälften keine oder nur eine geringe Dämpfung erfolgen, wohingegen bei größeren Verdrehwinkeln eine vergleichsweise stärkere Dämpfung erfolgen soll. Diese Charakteristik soll insbesondere lastunabhängig eingestellt werden, das heißt unabhängig davon, ob die elastische Kupplung gerade ein großes oder ein kleines Drehmoment überträgt. Insbesondere soll auch bei der Übertragung hoher Drehmomente und bei gleichzeitigen Drehschwingungen mit kleiner Amplitude keine oder nur eine geringe Dämpfung eingestellt werden, und nur bei Drehschwingungen mit vergleichsweise großer Amplitude sowohl bei einem kleinen Drehmoment als auch bei einem großen Drehmoment eine stärkere Dämpfung erfolgen.

Eine bekannte elastische Kupplung in Scheibenbauweise, welche die gewünschte Charakteristik erreicht, ist in den Druckschriften DE 39 23 749 C1 und DE 102 41 103 A1 offenbart. Die beiden dort dargestellten Kupplungen weisen jeweils einen schwimmenden Dämpfungsring auf, welcher gegenüber beiden Kupplungshälften begrenzt verdrehbar in einem mit einem Dämpfungsmedium befüllten Innenraum der Kupplung eingebracht ist und eine Dämpfungskammer in Teilkammern unterteilt. Dabei ist der schwimmende Dämpfungsring gemäß der DE 102 41 103 A1 über dem Umfang der Kupplung in einzelne voneinander getrennte Ringsegmente unterteilt, welche mit radial nach außen gerichteten Nocken auf der Mittelscheibe der Kupplung, die die zweite Kupplungshälfte ausbildet, und radial nach innen gerichteten Nocken an einem äußeren Rand der ersten Kupplungshälfte zusammenarbeiten, um erste Teilkammern und zweite Teilkammern, die sich in ihrem Volumen bei der relativen Verdrehung zwischen erster Kupplungshälfte und zweiter Kupplungshälfte ändern, auszubilden.

Die aus der DE 102 41 103 A1 (bzw. der DE 10 201 252 A1) bekannten Merkmale sind im Oberbegriff von Anspruch 1 zusammengefasst. Auch die Offenlegungsschriften DE 100 22 625 A1 und DE 199 07 414 A1 zeigen entsprechende Merkmale.

Obwohl sich die gattungsgemäße Kupplung in der Praxis als höchst zuverlässig und hinsichtlich ihrer Charakteristik als überlegen erwiesen hat, gibt es Raum für weitere Verbesserungen. So ist es beispielsweise wünschenswert, die Dämpfungscharakteristik im Bereich nahe der maximalen relativen Verdrehung zwischen der ersten Kupplungshälfte und der zweiten Kupplungshälfte zu verstärken, insbesondere über die bisherige hydraulische Dämpfung hinaus, vorteilhaft ohne das Dämpfungsverhalten im übrigen Verdrehwinkelbereich unerwünscht zu beeinflussen.

Der vorliegenden Erfindung liegt daher die Aufgabe zugrunde, eine elastische Kupplung in Scheibenbauweise anzugeben, welche diesem Wunsch nachkommt. Insbesondere soll sich die elastische Kupplung dabei durch geringe bauliche Änderungen gegenüber der bewährten Ausführungsform auszeichnen und trotzdem die gewünschte verstärkte Dämpfung im maximalen Relativdrehwinkelbereich aufweisen.

Die erfindungsgemäße Aufgabe wird durch eine elastische Kupplung mit den Merkmalen des Anspruches 1 gelöst. In den abhängigen Ansprüchen sind besonders vorteilhafte und zweckmäßige Ausgestaltungen der Erfindung angegeben.

Den Erfindern ist es gelungen, durch eine nur minimale Modifikation an der bewährten Kupplung mit schwimmendem Dämpfungsring, wobei der Dämpfungsring in einzelne Ringsegmente unterteilt ist, die gewünschte zusätzliche Dämpfung im Bereich großer Verdrehwinkel zwischen der ersten Kupplungshälfte und der zweiten Kupplungshälfte zur Verfügung zu stellen, indem sie sozusagen eine Reibdämpfung im Bereich großer Verdrehwinkel in die Kupplung eingebaut haben. Diese Reibdämpfung wird durch Herstellen einer reibenden Anlagefläche zwischen den axialen Endbereichen der Ringsegmente des schwimmenden Dämpfungsringes und diesen zugewandten äußeren Umfangsbereichen der Mittelscheibe und/oder inneren Umfangsbereichen wenigstens einer Seitenscheibe erreicht. Erfindungsgemäß ist die Kupplung dabei derart gestaltet, dass die Anlage zwischen wenigstens einem axialen Ende jedes Ringsegmentes (prinzipiell würde es auch genügen, wenn nur ein einziges Ringsegment erfindungsgemäß ausgeführt ist) und der Mittelscheibe oder dem äußeren Rand wenigstens einer Seitenscheibe nur im in Umfangsrichtung durch das Dämpfungsmedium oder eine der beiden Kupplungshälften belasteten Zustand des Ringsegmentes wirksam ist, wohingegen im in Umfangsrichtung durch das Dämpfungsmedium oder eine der beiden Kupplungshälften nicht belasteten Zustand des Ringsegmentes, ein vorgegebener Abstand in Radialrichtung der Kupplung zwischen dem axialen Ende des Ringsegmentes und der Mittelscheibe und/oder dem äußeren Rand wenigstens einer Seitenscheibe eingestellt ist.

Gemäß einer besonders vorteilhaften Ausführungsform wird der im belasteten Zustand des Ringsegmentes überbrückte Abstand zwischen einem axialen Ende jedes Ringsegmentes und der Mittelscheibe hergestellt, wohingegen ein vorgegebener überbrückbarer Abstand zwischen einem axialen Ende, insbesondere dem entgegengesetzten axialen Ende, des Ringsegmentes und dem äußeren Rand der wenigstens einen Seitenscheibe nur als Option vorgesehen ist, wobei hier auch dann eine nur teilweise Überbrückung des zuletzt genannten Abstandes in Betracht kommt.

Im Einzelnen weist eine erfindungsgemäße elastische Kupplung in Scheibenbauweise, die insbesondere zur Dämpfung von Torsionsschwingungen einer Brennkraftmaschine ausgeführt ist, eine erste Kupplungshälfte und eine zweite Kupplungshälfte auf, die begrenzt gegeneinander entgegen der Kraft von wenigstens einem vorgesehenen elastischen Kupplungselement verdrehbar sind. Die erste Kupplungshälfte umfasst zwei am Außenumfang drehstarr verbundene Seitenscheiben, und die zweite Kupplungshälfte wird durch mindestens eine einer Nabe zugeordnete Mittelscheibe gebildet, die zwischen den Seitenscheiben von diesen umhüllt angeordnet ist.

Die Seitenscheiben begrenzen einen die Mittelscheibe aufnehmenden flüssigkeitsdichten Innenraum, wobei im radial äußeren Bereich des Innenraumes wenigstens eine, beim gegenseitigen Verdrehen der Kupplungshälften im Volumen veränderbare mit einem Dämpfungsmedium befüllte Dämpfungskammer angeordnet ist.

In den Innenraum ist ein gegenüber den beiden Kupplungshälften jeweils begrenzt verdrehbarer schwimmender Dämpfungsring eingebracht, welcher mit der ersten Kupplungshälfte wenigstens eine erste Teilkammer der Dämpfungskammer und mit der zweiten Kupplungshälfte wenigstens eine zweite Teilkammer der Dämpfungskammer bildet, wobei der schwimmende Dämpfungsring über dem Umfang der Kupplung in einzelne voneinander getrennte Ringsegmente unterteilt ist, welche gleitend radial außen auf der Mittelscheibe und/oder radial innen auf einem äußeren Rand wenigstens einer Seitenscheibe gelagert sind.

Erfindungsgemäß sind die Ringsegmente nun an einem oder beiden axialen Enden mit dem im unbelasteten Zustand vorgegebenen Abstand in Radialrichtung der Kupplung gegenüber der Mittelscheibe und/oder dem äußeren Rand wenigstens einer Seitenscheibe angeordnet, wobei dieser vorgegebene Abstand im belasteten Zustand der Ringsegmente überbrückt wird, um durch Anlage an der Mittelscheibe und/oder dem äußeren Rand der wenigstens einen Seitenscheibe eine Gleitreibung herzustellen.

Die hydraulische Dämpfung kann im Bereich vergleichsweise großer relativer Verdrehwinkel zwischen der ersten Kupplungshälfte und der zweiten Kupplungshälfte dadurch verstärkt sein, dass der Querschnitt einer Teilkammer, insbesondere der ersten Teilkammer, in Richtung zu den axialen Enden der Ringsegmente vergleichsweise verringert ausgeführt ist, insbesondere mit einem ersten, vergleichsweise größeren Querschnitt in der axialen Mitte der Ringsegmente und mit jeweils einem vergleichsweise kleineren Querschnitt im Bereich über einer vorgegebenen axialen Erstreckung vor den axialen Enden, jeweils bezogen auf einen Axialschnitt durch die Kupplung. Die unterschiedlichen Bereiche können beispielsweise durch Ausbilden einer "Badewanne" im mittleren Bereich der Ringsegmente vorgesehen sein. Dies wird später noch erläutert.

Insbesondere wenn ein gegenüber der Mittelscheibe in einer Ebene durch einen Radialschnitt der Kupplung verkippbares Ringsegment vorgesehen ist, so kann dieses vorteilhaft zumindest im nicht belasteten Zustand oder stets außen auf der Mittelscheibe über einem Kipppunkt oder Kippbereich abgestützt sein. Gemäß einer Ausführungsform ist es auch möglich, dass der Kipppunkt oder Kippbereich im unbelasteten Zustand der Ringsegmente in der axialen Mitte der Ringsegmente positioniert ist, und mit zunehmender Belastung in Richtung eines axialen Endes der Ringsegmente wandert.

Insbesondere, um einen solchen Kipppunkt beziehungsweise Kippbereich zu erreichen, jedoch auch bei anderen Ausgestaltungen, beispielsweise mit einem verbiegbaren Ringsegment, kann eine radial innere Kontur der Ringsegmente vorgesehen sein, die von einer ihr zugewandten radial äußeren Kontur der Mittelscheibe abweicht. Beide Konturen können gemäß einer Ausführungsform kreislinienförmig gestaltet sein, jedoch mit verschiedenen Kreisdurchmessern ausgeführt sein, wobei der Kreisdurchmesser des Ringsegmentes in der Regel größer als der Kreisdurchmesser der Kontur der Mittelscheibe ist.

Die gleitenden Anlageflächen zwischen den Ringsegmenten und einer oder beiden Kupplungshälften können mittels Dämpfungsmedium aus der Dämpfungskammer geschmiert sein.

Ferner ist es möglich, eine temperaturabhängige Verringerung des Abstandes zwischen dem axialen Ende der Ringsegmente und der Mittelscheibe und/oder dem äußeren Rand wenigstens einer Seitenscheibe vorzusehen, wobei sich der Abstand insbesondere mit zunehmender Temperatur des Dämpfungsmediums beziehungsweise des Ringsegmentes verringert. Im letzteren Fall kann eine schneller einsetzende Reibdämpfung im Vergleich zu kleineren Temperaturen insbesondere des Dämpfungsmediums erreicht werden, was einer verminderter hydraulische Dämpfung, die unter bestimmten Umständen mit zunehmender Temperatur des Dämpfungsmediums eintreten kann, entgegenwirkt.

Diese temperaturabhängige Spieländerung zwischen dem axialen Ende der Ringsegmente und dem zugeordneten Bauteil - äußerer Rand der wenigstens einen Seitenscheibe oder Mittelscheibe - kann beispielsweise dadurch erreicht werden, dass die Ringsegmente derart gestaltet sind, dass sie sich mit zunehmender Temperatur entweder begradigen oder verkrümmen, je nachdem, ob die Reibung auf der radialen Außenseite der Ringsegmente oder auf der radialen Innenseite der Ringsegmente verstärkt werden soll.

Die Erfindung soll nachfolgend anhand eines Ausführungsbeispiels und den beigefügten Figuren exemplarisch beschrieben werden.

Es zeigen:
- Figur 1: einen Ausschnitt aus einem Axialschnitt durch eine erfindungsgemäß ausgeführte elastische Kupplung, wobei jedoch der erfindungsgemäß eingestellte Abstand zwischen Ringsegment und Mittelscheibe beziehungsweise Ringsegment und äußerem Rand der Seitenscheibe noch nicht erkennbar ist;
- Figur 2: eine schematische, nicht maßstäbliche vergrößerte Darstellung, um den erfindungsgemäß vorgesehenen Abstand zu erläutern, der jedoch in der Praxis in der Regel weniger ausgeprägt ausfallen wird.

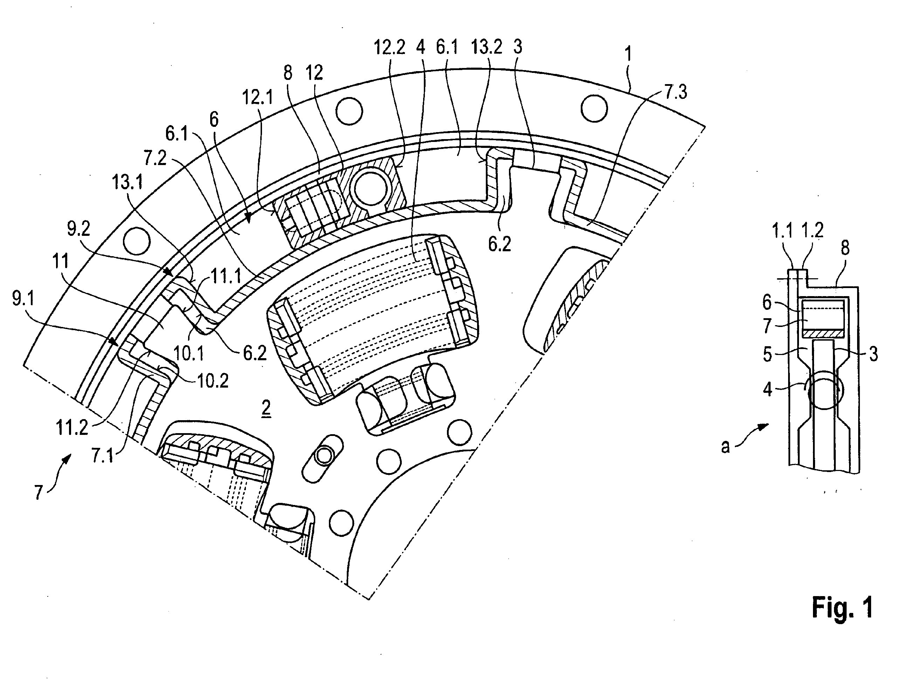

In der Figur 1 erkennt man die erste Kupplungshälfte 1, welche, wie in dem Detail a schematisch dargestellt ist, zwei am Außenumfang drehstarr verbundene Seitenscheiben 1.1 und 1.2 umfasst. Die erste Kupplungshälfte 1 umschließt eine zweite Kupplungshälfte 2, wobei die beiden Kupplungshälften 1, 2 über elastische Kupplungselemente 4 drehelastisch und begrenzt relativ zueinander verdrehbar sind. Beispielsweise sind die beiden Kupplungshälften 1, 2, wie hier dargestellt, über Druckfedern in Umfangsrichtung der Kupplung gegeneinander abgestützt, wobei entsprechende Abstützflächen für die Druckfedern an den Seitenscheiben 1.1, 1.2 und der zweiten Kupplungshälfte 2 vorgesehen sind. Exemplarisch sind die Abstützflächen gemäß dem Detail a durch Vorsprünge an den Seitenscheiben 1.1, 1.2 ausgeführt.

Die zweite Kupplungshälfte 2 wird durch eine Mittelscheibe 3 gebildet, die in einem Innenraum 5, der durch die beiden Seitenscheiben 1.1, 1.2 begrenzt wird, aufgenommen ist.

Im radial äußeren Bereich des Innenraumes 5 sind eine Vielzahl von Dämpfungskammern 6 angeordnet, die mit einem Dämpfungsmedium befüllt sind und beim gegenseitigen Verdrehen der Kupplungshälften 1, 2 im Volumen verändert werden.

Ferner ist ein schwimmender Dämpfungsring 7 vorgesehen, der über dem Umfang der Kupplung in einzelne voneinander getrennte Ringsegmente 7.1, 7.2 und 7.3 unterteilt ist. Der Dämpfungsring 7 beziehungsweise dessen Ringsegmente 7.1, 7.2, 7.3 gleiten radial außen auf der Mittelscheibe 3 und radial innen auf einem äußeren Rand 8 der Seitenscheiben 1.1, 1.2. Vorliegend wird der äußere Rand 8 auch durch Nocken 12 gebildet, die von den Seitenscheiben 1.1, 1.2, zumindest von einer der beiden, radial nach innen hervorstehen und entgegengesetzte Begrenzungsflächen 12.1, 12.2 aufweisen, welche gegenüberstehenden Begrenzungsflächen 13.1 und 13.2 der Ringsegmente 7.1, 7.2, 7.3 zugewandt sind.

Die Mittelscheibe 3 weist Nocken 11 auf, welche jedoch radial nach außen hervorstehen. Die Nocken 11 weisen ebenfalls sich in Radialrichtung erstreckende Anschlagflächen 11.1, 11.2 auf, die in Umfangsrichtung in Radialrichtung verlaufenden Anschlagflächen 10.1, 10.2 an den beiden axialen Enden 9.1, 9.2 der Ringsegmente 7.1, 7.2, 7.3 gegenüberstehen.

Jede Dämpfungskammer 6 ist durch ein Ringsegment 7.1, 7.2, 7.3 in zwei Teilkammern 6.1, 6.2 unterteilt. Bei der gezeigten Ausführungsform unterteilt je ein axiales Ende 9.1, 9.2 jedes Ringsegmentes 7.1, 7.2, 7.3 eine Dämpfungskammer 6 in die beiden Teilkammern 6.1, 6.2.

Bei der gezeigten Ausführungsform sind somit die ersten Teilkammern 6.1 jeweils zwischen einem Ringsegment 7.1, 7.2, 7.3 und der ersten Kupplungshälfte 1 beziehungsweise deren Nocken 12 angeordnet, wohingegen die zweiten Teilkammern 6.2 jeweils zwischen einem Ringsegment 7.1, 7.2, 7.3 und der Mittelscheibe 3 beziehungsweise deren Nocken 11 angeordnet sind.

Wenn nun die zweite Kupplungshälfte 2 relativ gegenüber der ersten Kupplungshälfte 1 verdreht wird, so nähert sich, in Abhängigkeit der Drehrichtung, zunächst eine der beiden Anschlagflächen 11.1, 11.2 der zweiten Kupplungshälfte 2 der zugeordneten Anschlagfläche 10.1, 10.2 der Ringsegmente 7.1, 7.2, 7.3 an, wobei Dämpfungsmedium aus der sich verkleinernden zweiten Teilkammer 6.2 in die über einen Dämpfungsspalt verbundene zweite Teilkammer 6.2, die sich gleichzeitig vergrößert und vorliegend jeweils auf der anderen Seite in Umfangsrichtung des jeweiligen Nockens 11 positioniert ist, strömt. Durch Einstellen eines besonders großen Dämpfungsspaltes kann die Dämpfung minimiert oder sogar ausgeschaltet werden. In dem Moment, in dem die Anschlagfläche 11.1 an der Anschlagfläche 10.1 oder bei umgekehrter Drehrichtung die Anschlagfläche 11.2 an der Anschlagfläche 10.2 anschlägt, wird das entsprechende Ringsegment 7.1, 7.2, 7.3 erfasst und relativ gegenüber der ersten Kupplungshälfte und deren Nocken 12 verdreht. Hierdurch wird jeweils eine erste Teilkammer 6.1 auf der einen Seite jedes Nockens 12 verkleinert, und die zugeordnete erste Teilkammer 6.1 auf der anderen Seite des Nockens 12 wird vergrößert, wobei Dämpfungsmedium aus der sich verkleinernden ersten Teilkammer 6.1 in die sich vergrößernde erste Teilkammer 6.1 strömt. Die Verbindung zwischen diesen beiden Kammern wird über einen verhältnismäßig kleinen Dämpfungsspalt hergestellt, sodass die gewünschte Dämpfung eintritt.

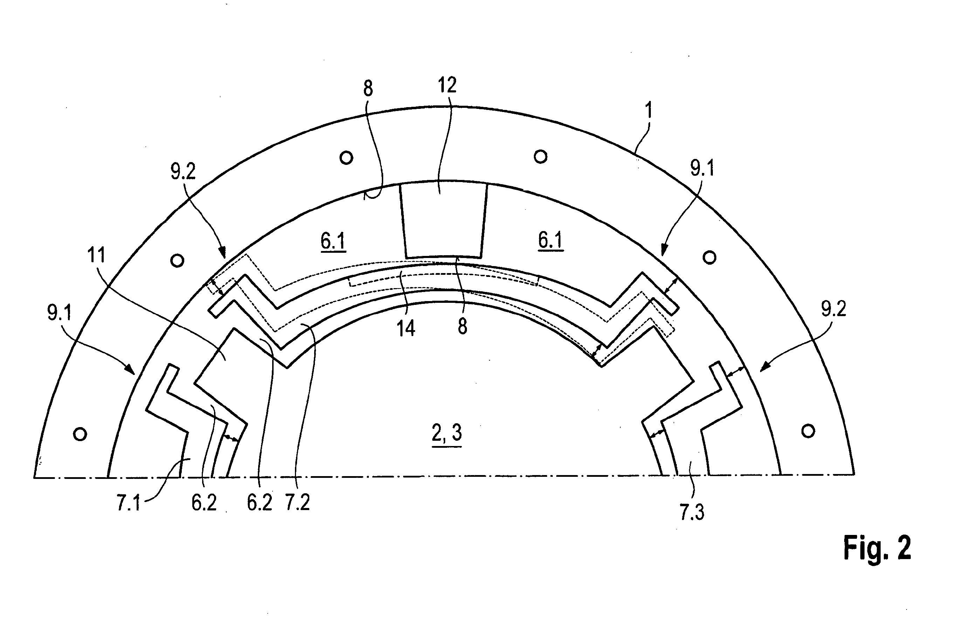

In der sich verkleinernden ersten Teilkammer 6.1 wird ein hydraulischer Druck aufgebaut, der auf das Ringsegment 7.1, 7.2, 7.3 eine Kipp- oder Biegewirkung im Sinne einer Bewegung auf die Mittelscheibe 3 zu bewirkt. Dabei geschieht Folgendes:
Wie man in der Figur 2 erkennen kann, ist im Bereich der axialen Enden 9.1, 9.2 der Ringsegmente 7.1, 7.2, 7.3 ein vorbestimmter Abstand in Radialrichtung der Kupplung zwischen dem Ringsegment 7.1, 7.2, 7.3, genauer dessen nach innen gerichteter Oberfläche, und der Mittelscheibe 3 beziehungsweise derer nach außen gerichteten Oberfläche vorgesehen, und zwar solange sich noch kein Dämpfungsdruck in der ersten Teilkammer 6.1 aufgebaut hat, das Ringsegment 7.1, 7.2, 7.3 demnach noch nicht in Umfangsrichtung durch das Dämpfungsmedium beziehungsweise die erste Kupplungshälfte 1 belastet wird.
Wenn nun aus dem hydraulischen Druck beziehungsweise Dämpfungsdruck in der ersten Teilkammer 6.1 die genannte Biegekraft oder Kippkraft auf das Ringsegment 7.1, 7.2, 7.3 aufgebracht wird, so wird dieser Abstand überbrückt und das Ringsegment 7.1, 7.2, 7.3 kommt reibend auf der Mittelscheibe 3 zur Anlage. Dies ist anhand des Ringsegmentes 7.2 an dessen ersten axialen Ende 9.1 durch die gestrichelte Linie dargestellt.

Je nachdem, ob das Ringsegment 7.1, 7.2, 7.3 biegsam oder verkippend zwischen der Mittelscheibe 3 und der ersten Kupplungshälfte 1 beziehungsweise deren äußeren Rand 8 angeordnet ist, wird auch der im unbelasteten Zustand des Ringsegmentes 7.1, 7.2, 7.3 gemäß einer Ausführungsform vorgesehene Abstand zwischen dem ersten oder zweiten axialen Ende 9.1, 9.2 des Ringsegmentes 7.1, 7.2, 7.3 und dem Rand 8 überbrückt. Dies ist in der Figur 2 an dem zweiten axialen Ende 9.2 des Ringsegmentes 7.2 anhand der gestrichelten Linie dargestellt. Wenn der äußere Rand 8 der ersten Kupplungshälfte 1 vergleichsweise dünnwandig, insbesondere aus Blech hergestellt ist, kann es notwendig sein, eine in Axialrichtung der Kupplung breite Anlagefläche zwischen dem äußeren Rand 8 und dem ersten oder zweiten axialen Ende 9.1, 9.2 des Ringsegmentes 7.1, 7.2, 7.3, an welcher Reibung auftritt, vorzusehen.

Durch das Überbrücken des einen und/oder des anderen Abstandes (radial innen oder radial außen am Ringsegment 7.1, 7.2, 7.3) wird eine Reibdämpfung erzeugt, die nicht wirksam ist, solange der Abstand hergestellt ist.

Die genannten vorgegebene Abstände oder der eine vorgegebene Abstand im nicht belasteten Zustand der Ringsegmente 7.1, 7.2, 7.3 können vergleichsweise klein ausgeführt sein, da lediglich das Auftreten einer unerwünschten oder unerwünscht hohen Reibkraft vermieden werden soll, solange die gezielte Abstandsüberbrückung nicht eingetreten ist. Beispielsweise kann der Abstand im Bereich von 0,5 bis 2 mm, insbesondere zwischen 0,5 und 1,5 mm oder 0,5 und 1 mm liegen. Jedoch sind auch andere, besonders größere Abstände, jedoch gegebenenfalls auch kleinere Abstände möglich.

In der Figur 2 ist ferner die Ausbildung einer Vergrößerung des Dämpfungsspaltes zwischen den beiden ersten Teilkammern 6.1 beidseits des Nockens 12 in Form einer sogenannten Badewanne 14 dargestellt, welche immer dann wirksam ist, solange sich das zugehörige Ringsegment, hier das Ringsegment 7.2, in seiner axialen Mittelstellung befindet.

Obwohl in den Figuren die Ringsegmente 7.1, 7.2, 7.3 im Bereich ihrer axialen Enden 9.1, 9.2 mit axialen Abkröpfungen dargestellt sind, die sich radial außen über die Nocken 11 erstrecken, ist dies nur eine Option, die eingespart werden kann.

## Patentansprüche

1. Elastische Kupplung in Scheibenbauweise, insbesondere zur Dämpfung von Torsionsschwingungen einer Brennkraftmaschine, mit den folgenden Merkmalen:
1.1 eine erste Kupplungshälfte (1), die zwei am Außenumfang drehstarr verbundene Seitenscheiben (1.1, 1.2) umfasst;
1.2 eine zweite Kupplungshälfte (2), die durch mindestens eine einer Nabe zugeordnete Mittelscheibe (3) gebildet ist, die zwischen den Seitenscheiben (1.1, 1.2) von diesen umhüllt angeordnet ist;
1.3 die beiden Kupplungshälften (1, 2) sind begrenzt gegeneinander entgegen der Kraft von wenigstens einem elastischen Kupplungselement (4) verdrehbar;
1.4 die Seitenscheiben (1.1, 1.2) begrenzen einen die Mittelscheibe (3) aufnehmenden flüssigkeitsdichten Innenraum (5),
1.5 im radial äußeren Bereich des Innenraumes (5) ist wenigstens eine, beim gegenseitigen Verdrehen der Kupplungshälften (1, 2) im Volumen veränderbare mit einem Dämpfungsmedium befüllte Dämpfungskammer (6) angeordnet;
1.6 in den Innenraum (5) ist ein gegenüber den beiden Kupplungshälften (1, 2) jeweils begrenzt verdrehbarer schwimmender Dämpfungsring (7) eingebracht, welcher mit der ersten Kupplungshälfte (1) wenigstens eine erste Teilkammer (6.1) der Dämpfungskammer (6) und mit der zweiten Kupplungshälfte (2) wenigstens eine zweite Teilkammer (6.2) der Dämpfungskammer (6) bildet; wobei
1.7 der schwimmende Dämpfungsring (7) über dem Umfang der Kupplung in einzelnen voneinander getrennte Ringsegmente (7.1, 7.2, 7.3) unterteilt ist, welche gleitend radial außen auf der Mittelscheibe (3) und/oder radial innen auf einem äußeren Rand (8) wenigstens einer Seitenscheibe (1.1, 1.2) gelagert sind;
**dadurch gekennzeichnet, dass**
1.8 an einem oder an beiden axialen Enden (9.1, 9.2) die Ringsegmente (7.1, 7.2, 7.3) im nicht in Umfangsrichtung durch das Dämpfungsmedium oder eine der beiden Kupplungshälften (1, 2) belasteten Zustand einen vorgegebenen Abstand in Radialrichtung der Kupplung gegenüber der Mittelscheibe (3) und/oder gegenüber dem äußeren Rand (8) wenigstens einer Seitenscheibe (1.1, 1.2) aufweisen, und
1.9 die Ringsegmente (7.1, 7.2, 7.3) derart verbiegend oder kippend auf der Mittelscheibe (3) und/oder an wenigstens einer Seitenscheibe (1.1, 1.2)-gelagert sind, dass der vorgegebene Abstand am axialen Ende (9.1, 9.2) der Ringsegmente (7.1, 7.2, 7.3) gegenüber der Mittelscheibe (3) und/oder dem äußeren Rand (8) wenigstens einer Seitenscheibe (1.1, 1.2) im durch das Dämpfungsmedium oder eine der beiden Kupplungshälften (1, 2) in Umfangsrichtung belasteten Zustand der Ringsegmente (7.1, 7.2, 7.3) durch Verbiegen oder Verkippen überbrückt wird.

2. Elastische Kupplung gemäß Anspruch 1, **dadurch gekennzeichnet, dass** in Axialschnitten durch die Kupplung der Querschnitt einer Teilkammer (6.1, 6.2) in Richtung zu den axialen Enden (9.1, 9.2) der Ringsegmente (7.1, 7.2, 7.3) verringert ausgeführt ist, insbesondere mit einem ersten, vergleichsweise größeren Querschnitt in der axialen Mitte der Ringsegmente (7.1, 7.2, 7.3) und jeweils einen vergleichsweise kleineren Querschnitt im Bereich vor den axialen Enden (9.1, 9.2).

3. Elastische Kupplung gemäß einem der Ansprüche 1 oder 2, **dadurch gekennzeichnet, dass** die Ringsegmente (7.1, 7.2, 7.3) im Bereich ihrer axialen Mitte im nicht in Umfangsrichtung durch das Dämpfungsmedium oder eine der beiden Kupplungshälften (1, 2) belasteten Zustand oder stets radial außen auf der Mittelscheibe (3) abgestützt sind.

4. Elastische Kupplung gemäß Anspruch 3, **dadurch gekennzeichnet, dass** eine radial innere Kontur der Ringsegmente (7.1, 7.2, 7.3) von einer ihr zugewandten radial äußeren Kontur der Mittelscheibe (3) abweicht, wobei insbesondere beide Konturen kreislinienförmig, jedoch mit verschiedenen Kreisdurchmessern ausgeführt sind.

5. Elastische Kupplung gemäß einem der Ansprüche 1 bis 4, **dadurch gekennzeichnet, dass** die gleitenden Anlageflächen zwischen den Ringsegmenten (71, 7.2; 7.3) und den beiden Kupplungshälften (1, 2) mittels Dämpfungsmedium aus der Dämpfungskammer (6) geschmiert sind.

6. Elastische Kupplung gemäß einem der Ansprüche 1 bis 5, **dadurch gekennzeichnet, dass** sich der Abstand in Radialrichtung zwischen den axialen Enden (9.1, 9.2) der Ringsegmente (7.1, 7.2, 7.3) und der Mittelscheibe (3) und/oder dem äußeren Rand (8) wenigstens einer Seitenscheibe (1.1, 1.2) in Abhängigkeit der Temperatur des Dämpfungsmediums und/oder der Ringsegmente (7.1, 7.2, 7.3) ändert, insbesondere verringert.

7. Elastische Kupplung gemäß Anspruch 6, **dadurch gekennzeichnet, dass** die Ringsegmente (7.1, 7.2, 7.3) derart gestaltet sind, dass sie sich mit zunehmender Temperatur begradigen oder verkrümmen.

8. Elastische Kupplung gemäß einem der Ansprüche 1 bis 7, **dadurch gekennzeichnet, dass** die Ringsegmente (7.1, 7.2, 7.3) derart angeordnet sind, dass sie stets an einem Kipppunkt oder über einen Kippbereich auf der Mittelscheibe (3) aufliegen, und sich der Kipppunkt oder Kippbereich mit zunehmender relativer Verdrehung zwischen der ersten Kupplungshälfte (1) und dem schwimmenden Dämpfungsring (7) oder zwischen der zweiten Kupplungshälfte (2) und dem schwimmenden Dämpfungsring (7) in Richtung zu einem axialen Ende (9.1, 9.2) der Ringsegmente (7.1, 7.2, 7.3) bewegt.

9. Elastische Kupplung gemäß einem der Ansprüche 1 bis 8, **dadurch gekennzeichnet, dass** die Ringsegmente (7.1, 7.2, 7.3) an ihren beiden axialen Enden (9.1, 9.2) jeweils eine Anschlagfläche (10.1, 10.2) aufweisen, die bei relativer Verdrehung zwischen der ersten Kupplungshälfte (1) oder der zweiten Kupplungshälfte (2) und dem schwimmenden Dämpfungsring (7) an entgegengesetzt zugeordneten Anschlagflächen (11.1, 11.2) der ersten Kupplungshälfte (1) oder der zweiten Kupplungshälfte (2) anschlagen.

10. Elastische Kupplung gemäß einem der Ansprüche 1 bis 9, **dadurch gekennzeichnet, dass** jedes Ringsegment (7.1, 7.2, 7.3) mit der ersten Kupplungshälfte (1) und der zweiten Kupplungshälfte (2) jeweils zwei Dämpfungskammern (6) mit ersten und zweiten Teilkammern (6.1, 6.2) bildet.

## Claims

1. An elastic coupling in disc design, in particular for damping torsional vibrations of an internal combustion machine, having the following features:
1.1 a first coupling half (1), which comprises two side discs (1.1, 1.2) connected rigidly to the external circumference;
1.2 a second coupling half (2), which is formed by at least one middle disc (3) allocated to a hub, the middle disc (3) is arranged between the side discs (1.1,1.2) and enveloped by said side discs;
1.3 both coupling halves (1, 2) can be rotated relative to one another to oppose the force of at least one elastic coupling element (4) within certain limits;
1.4 the side discs (1.1,1.2) define a liquid-tight inner space (5) accommodating the middle disc (3),
1.5 at least one damping chamber (6), filled with a damping medium, is arranged in the radially external region of the inner space (5), which can be modified in volume when the coupling halves (1, 2) twist relative to each other;
1.6 a floating damping ring (7), which is twistable within certain limits with respect to both coupling halves (1, 2), is inserted into the inner space (5), the damping ring (7) forms with the first coupling half (1) at least one first partial chamber (6.1) of the damping chamber (6) and with the second coupling half (2) at least one second partial chamber (6.2) of the damping chamber (6); whereas
1.7 the floating damping ring (7) over the circumference of the coupling is subdivided in individual ring segments (7.1,7.2, 7.3) which are separated from one another, the ring segments (7.1, 7.2, 7.3) are mounted to slide radially and outwardly on the middle disc (3) and/or radially and inwardly on an external edge (8) of at least one side disc (1.1, 1.2);
**characterised in that**
1.8 on one or on both axial ends (9.1, 9.2), the ring segments (7.1, 7.2, 7.3) have a predefined distance in radial direction of the coupling with respect to the middle disc (3) and/or with respect to the external edge (8) of at least one side disc (1.1,1.2), when said ring sections are not stressed in the circumferential direction by the damping medium or one of both coupling halves (1, 2), and
1.9 the ring segments (7.1, 7.2, 7.3) are mounted in a twisting manner or in a tilting manner on the middle disc (3) and/or on at least one side disc (1.1,1.2) in such a way that the predefined distance is bridged by twisting or tilting at the axial end (9.1,9.2) of the ring segments (7.1, 7.2, 7.3) with respect to the middle disc (3) and/or on the external edge (8) of at least one side disc (1.1, 1.2) when the ring segments (7.1, 7.2, 7.3) are stressed by the damping medium or one of both coupling halves (1, 2) in the circumferential direction.

2. The elastic coupling according to claim 1, **characterised in that** the cross-section of a partial chamber (6.1, 6.2) is reduced in axial cuts through the coupling in the direction of the axial ends (9.1, 9.2) of the ring segments (7.1, 7.2, 7.3), in particular with a first comparatively larger cross-section in the axial centre of the ring segments (7.1, 7.2, 7.3) and respectively a comparatively smaller cross-section in the region upstream of the axial ends (9.1, 9.2).

3. The elastic coupling according to one of claims 1 or 2, **characterised in that** the ring segments (7.1, 7.2, 7.3) are supported in the region of their axial centre when said ring segments are not stressed in the circumferential direction by the damping medium or one of both coupling halves (1, 2) or always radially and outwardly on the middle disc (3).

4. The elastic coupling according to claim 3, **characterised in that** a radially internal contour of the ring segments (7.1, 7.2, 7.3) deviates from a radially external contour of the middle disc (3) facing thereto, whereas in particular both contours are in the form of a circumference, however with different circular diameters.

5. The elastic coupling according to one of claims 1 to 4, **characterised in that** the sliding contact surfaces between the ring segments (7.1, 7.2; 7.3) and both coupling halves (1, 2) are lubricated by means of damping fluid from the damping chamber (6).

6. The elastic coupling according to one of claims 1 to 5, **characterised in that** the distance changes or decreases in radial direction between the axial ends (9.1, 9.2) of the ring segments (7.1, 7.2, 7.3) and of the middle disc (3) and/or the external edge (8) of at least one side disc (1.1, 1.2) according to the temperature of the damping medium and/or of the ring segments (7.1, 7.2, 7.3).

7. The elastic coupling according to claim 6, **characterised in that** the ring segments (7.1, 7.2, 7.3) are designed in such a way that they straighten themselves or bend themselves as the temperature increases.

8. The elastic coupling according to one of claims 1 to 7, **characterised in that** the ring segments (7.1, 7.2, 7.3) are arranged in such a way that they constantly lie on a tipping point or via a tipping region on the middle disc (3) and that the tipping point or the tipping region moves with increasing relative torsion between the first coupling half (1) and the floating damping ring (7) or between the second coupling half (2) and the floating damping ring (7) in the direction of a first axial end (9.1, 9.2) of the ring segments (7.1, 7.2, 7.3).

9. The elastic coupling according to one of claims 1 to 8, **characterised in that** the ring segments (7.1, 7.2, 7.3) present at both their axial ends (9.1, 9.2) respectively a contact surface (10.1,10.2) which in case of relative torsion between the first coupling half (1) and the second coupling half (2) and the floating damping ring (7) strike against contact surfaces (11.1, 11.2) of the first coupling half (1) and of the second coupling half (2), contact surfaces which are opposite to each other.

10. The elastic coupling according to one of claims 1 to 9, **characterised in that** every ring segment (7.1, 7.2,7.3) forms with the first coupling half (1) and the second coupling half (2) respectively two damping chambers (6) with first and second partial chambers (6.1, 6.2).

## Revendications

1. Accouplement élastique en plaques sandwich, en particulier pour amortir les vibrations de torsion d'un moteur à combustion, présentant les caractéristiques suivantes:
1.1 une première moitié d'accouplement (1), comprenant deux disques latéraux (1.1, 1.2) en liaison rigide avec la circonférence externe;
1.2 une seconde moitié d'accouplement (2), constituée d'au moins un disque médian (3) associé à un moyeu, un disque médian qui est disposé entre les disques latéraux (1.1,1.2) et enveloppé par lesdits disques latéraux;
1.3 les deux moitiés d'accouplement (1, 2) peuvent tourner l'une par rapport à l'autre pour s'opposer à la force d'au moins un élément d'accouplement (4) dans certaines limites;
1.4 les disques latéraux (1.1,1.2) délimitent un espace intérieur étanche aux liquides (5) recevant le disque médian (3),
1.5 au moins une chambre d'amortissement (6), remplie d'un fluide d'amortissement, est disposée dans la zone radialement extérieure de l'espace interne (5), dont le volume peut être modifié lorsque les moitiés d'accouplement (1, 2) se tordent l'une par rapport à l'autre;
1.6 une bague d'amortissement flottante (7), qui peut se tordre et qui est délimitée respectivement par rapport aux deux moitiés d'accouplement (1, 2), est introduite dans l'espace interne (5), une bague d'amortissement formant avec la première moitié d'accouplement (1) au moins une première chambre partielle (6.1) de la chambre d'amortissement (6) et avec la seconde moitié d'accouplement (2) au moins une seconde chambre partielle (6.2) de la chambre d'amortissement (6); où
1.7 la bague d'amortissement flottante (7) sur la circonférence de l'accouplement est subdivisée en segments annulaires individuels (7.1, 7.2, 7.3) qui sont séparés l'un de l'autre, segments annulaires qui sont montés pour glisser radialement et vers l'extérieur sur le disque médian (3) et/ou radialement et vers l'intérieur sur un bord externe (8) d'au moins un disque latéral (1.1, 1.2);
**caractérisé en ce que**
1.8 sur l'une ou les deux extrémités axiales (9.1, 9.2), les segments annulaires (7.1, 7.2, 7.3) présentent une distance prédéfinie dans la direction radiale de l'accouplement par rapport au disque médian (3) et/ou par rapport au bord externe (8) d'au moins un disque latéral (1.1, 1.2), lorsque lesdites sections annulaires ne sont pas contraintes dans la direction circonférentielle par le fluide d'amortissement ou l'une des deux moitiés d'accouplement (1, 2), et
1.9 les segments annulaires (7.1, 7.2, 7.3) sont montés de manière torsadée ou de manière basculante sur le disque médian (3) et/ou sur au moins un disque latéral (1.1,1.2) de telle sorte que la distance prédéfinie est comblée par torsion ou inclinaison à l'extrémité axiale (9.1, 9.2) des segments annulaires (7.1, 7.2, 7.3) par rapport au disque médian (3) et/ou par rapport au bord externe (8) d'au moins un disque latéral (1.1, 1.2) lorsque les segments annulaires (7.1, 7.2, 7.3) sont contraints par le fluide d'amortissement ou l'une des deux moitiés d'accouplement (1, 2) dans la direction circonférentielle.

2. Accouplement élastique selon la revendication 1, **caractérisé en ce que** la coupe transversale d'une chambre partielle (6.1, 6.2) est réduite en coupes axiales à travers l'accouplement dans la direction des extrémités axiales (9.1, 9.2) des segments annulaires (7.1, 7.2, 7.3), en particulier avec une première coupe transversale comparativement plus grande dans le centre axial des segments annulaires (7.1, 7.2, 7.3) et respectivement une coupe transversale comparativement plus petite dans la zone en amont des extrémités axiales (9.1, 9.2).

3. Accouplement élastique selon l'une des revendications 1 ou 2, **caractérisé en ce que** les segments annulaires (7.1, 7.2, 7.3) sont supportés dans la zone de leur centre axial lorsque lesdits segments annulaires ne sont pas contraints dans la direction circonférentielle par le fluide d'amortissement ou l'une des deux moitiés d'accouplement (1, 2) ou toujours radialement et vers l'extérieur sur le disque médian (3).

4. Accouplement élastique selon la revendication 3, **caractérisé en ce qu'**un contour radialement interne des segments annulaires (7.1, 7.2, 7.3) s'écarte d'un contour radialement externe du disque médian (3) leur faisant face, où en particulier les deux contours sont sous forme de circonférence, cependant avec différents diamètres circulaires.

5. Accouplement élastique selon l'une des revendications 1 à 4, **caractérisé en ce que** les surfaces de contact coulissantes entre les segments annulaires (7.1, 7.2; 7.3) et les deux moitiés d'accouplement (1, 2) sont lubrifiées au moyen d'un fluide d'amortissement à partir de la chambre d'amortissement (6).

6. Accouplement élastique selon l'une des revendications 1 à 5, **caractérisé en ce que** la distance change ou rétrécit dans la direction radiale entre les extrémités axiales (9.1, 9.2) des segments annulaires (7.1, 7.2, 7.3) et du disque médian (3) et/ou du bord externe (8) d'au moins un disque latéral (1.1, 1.2) selon la température du fluide d'amortissement et/ou des segments annulaires (7.1, 7.2, 7.3).

7. Accouplement élastique selon la revendication 6, **caractérisé en ce que** les segments annulaires (7.1, 7.2, 7.3) sont conçus de telle sorte qu'ils se redressent ou se recourbent lorsque la température augmente.

8. Accouplement élastique selon l'une des revendications 1 à 7, **caractérisé en ce que** les segments annulaires (7.1, 7.2, 7.3) sont disposés de telle sorte qu'ils reposent de façon constante sur un point d'inclinaison ou bien par le biais d'une zone d'inclinaison sur le disque médian (3) et que le point d'inclinaison ou la zone d'inclinaison se déplace avec l'augmentation de la torsion relative entre la première moitié d'accouplement (1) et la bague d'amortissement flottante (7) ou entre la seconde moitié d'accouplement (2) et la bague d'amortissement flottante (7) dans la direction d'une première extrémité axiale (9.1, 9.2) des segments annulaires (7.1, 7.2, 7.3).

9. Accouplement élastique selon l'une des revendications 1 à 8, **caractérisé en ce que** les les segments annulaires (7.1, 7.2, 7.3) présentent en leurs deux extrémités axiales (9.1, 9.2) respectivement une surface de contact (10.1,10.2) qui en cas de torsion relative entre la première moitié d'accouplement (1) et la seconde moitié d'accouplement (2) et la bague d'amortissement flottante (7) frappent contre les surfaces de contact (11.1, 11.2) de la première moitié d'accouplement (1) et de la seconde moitié d'accouplement (2), surfaces de contact situées l'une en face de l'autre.

10. Accouplement élastique selon l'une des revendications 1 à 9, **caractérisé en ce que** chaque segment annulaire (7.1, 7.2, 7.3) constitue avec la première moitié d'accouplement (1) et la seconde moitié d'accouplement (2) respectivement deux chambres d'amortissement (6) avec la première et la seconde chambres partielles (6.1 , 6.2).
